# DEMANDE DE BREVET EUROPEEN

(11) **EP 4 465 639 A1**
(43) Date de publication de la demande: **20.11.2024**
(21) Numéro de dépôt: 24172781.7
(22) Date de dépôt: 26.04.2024
(51) Int. Cl.: H04N 21/436, H04N 21/4402, H04N 21/442, H04N 21/6405, H04N 21/6408, H04N 21/647, H04N 21/845

(54) **PROCÉDÉ DE GESTION DU TRAITEMENT D'UN FLUX VIDÉO DANS UN RÉSEAU LOCAL**

(30) Priorité: 15.05.2023 FR 2304804
(71) Demandeur: Orange, 92130 Issy-les-Moulineaux (FR)
(72) Inventeur: MARCHAND, Hervé, 92326 Chatillon (FR); RIVOALEN, Mathieu, 92326 Chatillon (FR)

(57) **Abrégé**

L'invention se rapporte à un procédé de gestion du traitement d'un flux de données dans un réseau local (LI1) comprenant un ensemble de dispositifs de traitement de données (PC,MOB,GTW), caractérisé en ce qu'il comprend une étape de sélection (ET3) d'un dispositif (PC) dans l'ensemble de dispositifs de traitement de données et de traitement du flux dans le dispositif sélectionné.

## Description

### Domaine technique

Le domaine de l'invention est celui des contenus multimédias numériques, à savoir les contenus audio et/ou vidéo numériques, également appelés contenus audiovisuels.

L'invention se rapporte à un procédé de gestion du traitement d'un flux vidéo dans un réseau local.

L'entité de traitement est apte à recevoir un flux de données, à traiter les données et à transmettre les données traitées. Dans l'exemple qui servira à illustrer l'invention dans la suite, l'entité de traitement est un dispositif doté d'un processeur et est capable de recevoir des paquets de données depuis un premier réseau, de traiter les données de manière à obtenir des segments de contenus et à transmettre sur demande les segments obtenus à destination d'un dispositif de lecture. Une telle entité est par exemple une entité capable de fournir des segments en mode « adaptative streaming » sans se limiter à ce dernier.

Un dispositif de lecture vise en particulier tout dispositifs aptes à recevoir des flux multimédias sous forme de segments par exemple un décodeur, un téléphone mobile, une tablette, etc., et à lire les contenus reçus.

Le lien de communication entre le dispositif de lecture et un dispositif fournissant des segments est quelconque. Dans l'exemple décrit ci-dessous, ce lien sera un lien unicast.

Un contenu est par exemple un contenu diffusé en temps réel appelé aussi contenu « live » par l'homme du métier, ou un contenu de télévision à la demande, ou un contenu de vidéo à la demande, etc.

### Etat de la technique

Il existe aujourd'hui plusieurs modes de transmission de contenu depuis un émetteur de contenus vers un dispositif de lecture de contenu. Un mode connu est par exemple le mode Multicast ABR (M-ABR ou Multicast Adaptive Bit Rate).

Ce mode M-ABR met en oeuvre un transport de paquets IP en mode Multicast. Dans ce mode, plusieurs canaux de transmission multicast sont créés pour une seule chaine TV afin de coder et diffuser plusieurs flux avec différentes qualités sur chaque canal multicast, respectivement. En d'autres mots, les canaux diffusent un même contenu avec différentes qualités d'images, respectivement.

Une adresse IP est attribuée à chaque canal, de cette façon un accès au contenu dans une qualité souhaitée s'effectue en se connectant à l'adresse IP correspondante.

Le mode multicast M-ABR est mis en oeuvre par une entité de traitement qui sera référencée nCDN dans la suite. Cette entité de traitement est installée dans une passerelle domestique qui interface un réseau WAN (sigle de Wide Area Network) et un réseau local LAN (Local Area Network). Cette entité de traitement joue le rôle de point de terminaison du flux Multicast. Dans les faits, cette entité de traitement reçoit un flux de données audio et/ou vidéo transmis depuis un serveur en mode de multicast (par exemple avec la technologie « IPTV » (sigle de « Internet Protocol Télévision » en anglais) ; l'entité de traitement mémorise ensuite les paquets reçus, segmente les paquets reçus conformément à la nome HAS et transmet, en unicast, les segments les uns après les autres à destination d'un dispositif de lecture de segments.

Comme l'entité de traitement est installée dans la passerelle domestique, la qualité de traitement dépend donc des capacités de traitement de la passerelle. Il est important que les capacités de traitement de la passerelle soient optimales pour traiter au mieux le flux de données et assurer une qualité de service optimale.

Or, ce n'est pas toujours le cas pour de multiples raisons. Par exemple, au moment du traitement, la passerelle peut traiter d'autres données et peut donc voir ses capacités de traitement diminuées ; aussi, la passerelle peut être nativement peu performante en termes de capacité de traitement pour des raisons de coûts financiers. Un problème est que, lorsque la passerelle domestique voit sa capacité de traitement diminuée ou que ses performances ne sont pas suffisantes, on constate des gels d'images. La restitution du contenu n'est donc pas optimale, et l'expérience utilisateur est très mauvaise.

Aussi, lorsque la passerelle domestique est indisponible, l'accès au flux de données n'est plus possible.

### L'invention vient améliorer la situation

### L'invention

A cet effet, l'invention se rapporte à un procédé de gestion du traitement d'un flux de données dans un réseau local comprenant un ensemble de dispositifs de traitement de données, caractérisé en ce qu'il comprend une étape de sélection d'un dispositif dans l'ensemble de dispositifs de traitement de données et de traitement du flux dans le dispositif sélectionné.

L'invention évite d'utiliser un dispositif par défaut pour le traitement d'un flux de données, en l'espèce une passerelle domestique. La possibilité de choisir à souhait un dispositif dans un ensemble de dispositifs de traitement de données permet entre autres d'éviter une situation de blocage lié à l'indisponibilité du dispositif incluant l'entité de traitement par exemple parce que le dispositif concerné est hors tension. Aussi, en réalisant le traitement du flux de données par un dispositif choisi judicieusement dans le réseau local, par exemple le dispositif ayant des capacités de traitement optimales pour le traitement visé, le traitement résultant sera forcément de meilleure qualité. Les risques de gel d'images sont alors largement réduits voire inexistants.

Un dispositif dudit ensemble est une passerelle domestique. Selon un premier mode de réalisation, le flux est reçu par la passerelle domestique selon un premier mode de transmission, et routé par la passerelle à destination du dispositif sélectionné pour y être traité, le traitement consistant à transformer le premier mode de transmission en un deuxième mode de transmission.

Selon une variante de ce premier mode, le premier mode est un mode de transmission multicast et le deuxième mode de transmission est le mode unicast

Selon un deuxième mode de réalisation, qui pourra être mis en oeuvre alternativement ou cumulativement avec le précédent mode, les dispositifs de traitement de données ont une adresse dans le réseau ; dans cette configuration, la sélection du dispositif de traitement de données est suivie d'une transmission de l'adresse à destination d'un dispositif de lecture apte à lire le flux de données issu du traitement. Ce mode est utile lorsque le réseau domestique est composé de plusieurs dispositifs de traitement de données. A réception de cette adresse, le dispositif de lecture adresse ses requêtes d'accès à un contenu en utilisant l'adresse du dispositif de traitement de données du dispositif pour obtenir des segments depuis ce dispositif sélectionné et requérir ensuite une restitution des segments obtenus. On verra dans un exemple que cette adresse est une adresse IP (sigle de Internet Protocol). Une variante pourrait aussi consister pour le dispositif de lecture à émettre toutes requêtes d'accès à destination de la passerelle domestique qui route ensuite vers le dispositif sélectionné.

Selon un troisième mode de réalisation, qui pourra être mis en oeuvre alternativement ou cumulativement avec les précédents modes, le dispositif de traitement de données est sélectionné en fonction de ses capacités de traitement. Comme indiqué ci-dessus, un dispositif de traitement de données est choisi judicieusement, ici en fonction de ses capacités, sous-entendu des capacités de ses ressources physiques et/ou logicielles. Cette sélection permettra de réaliser un meilleur traitement et donc d'assurer une restitution du contenu sans gels d'images.

Selon un quatrième mode de réalisation, qui pourra être mis en oeuvre alternativement ou cumulativement avec les précédents modes, la sélection s'effectue en comparant des capacités de traitement de dispositifs du réseau local et en sélectionnant un dispositif à la base de la comparaison. Dans ce mode, une entité de gestion récupère les capacités de traitement de tout ou partie des dispositifs du réseau local, à savoir les puissances des processeurs, les tailles mémoires, etc., respectivement. Une fois récupérées, le calcul se limite à une comparaison des capacités. Ce mode est simple et consomme très peu de ressources.

Selon un cinquième mode de réalisation, qui pourra être mis en oeuvre alternativement ou cumulativement avec les précédents modes, les capacités de traitement incluent une taille de mémoire volatile. Ce mode permet de sélectionner un dispositif équipé d'une mémoire volatile adaptée au flux de données. Par exemple, si le flux de données est un flux vidéo de type 4K entrant dans le réseau local, la mémoire volatile sera sélectionnée parmi les mémoires volatiles des différents dispositifs de telles façon à traiter ce flux correctement. En variante, le flux de données étant associé à un débit d'encodage, le choix du lieu d'installation de l'entité de traitement peut dépendre en outre du débit d'encodage. En effet, certains flux voient leurs débits d'encodage variés dans le temps du fait de la variation de la bande passante sur le réseau ; dans ce cas, il est judicieux de prendre en compte ce débit d'encodage lors du choix de la mémoire volatile à utiliser sous-entendu du dispositif incluant cette mémoire volatile.

Selon un sixième mode de réalisation, qui pourra être mis en oeuvre alternativement ou cumulativement avec les précédents modes, que le réseau local comprend une passerelle domestique apte à interfacer un réseau étendu et le réseau local. Dans cette configuration, la passerelle route un flux de données issu du réseau vers le lieu de traitement dans le réseau local. Ce mode vise le cas d'une réception d'un flux de données, par exemple un flux multimédia, issu d'un serveur de contenu par exemple un serveur multicast de type M-ABR ; la passerelle ayant connaissance du dispositif sélectionné, en particulier de l'adresse IP du dispositif sélectionné, route le flux reçu grâce à cette adresse IP.

Selon un septième mode de réalisation, qui pourra être mis en oeuvre alternativement ou cumulativement avec les précédents modes, le dispositif de traitement de données est apte à recevoir le flux de données depuis un réseau de communication. Ce mode permet de sélectionner un dispositif de traitement données capable non seulement de traiter le flux avec performance mais aussi de recevoir le flux de données depuis le réseau de communication, par exemple sans nécessiter de passerelle domestique. L'avantage est que si la passerelle est indisponible, le dispositif ainsi sélectionné peut accéder au flux en lieu et place de la passerelle.

Selon un huitième mode de réalisation, qui pourra être mis en oeuvre alternativement ou cumulativement avec les précédents modes, le dispositif de traitement choisi varie dans le temps. Ce mode permet de modifier le lieu du traitement du flux de données dans le temps. Cela permet d'utiliser le dispositif le plus adapté en particulier lorsque le dispositif choisi voit ses capacités diminuer à un instant donné. Le changement de dispositif pour le traitement peut aussi se baser sur des prévisions de charge sur les dispositifs du réseau local.

Selon un aspect matériel, l'invention se rapporte à une entité de gestion du traitement d'un flux de données dans un réseau local comprenant un ensemble de dispositifs de traitement de données, caractérisé en ce qu'il consiste à sélectionner un dispositif de traitement de données dans ledit ensemble, et à traiter le flux de données dans le dispositif sélectionné.

Selon un autre aspect matériel, l'invention se rapporte à un décodeur comprenant une entité de gestion telle que définie ci-dessus.

Selon un autre aspect matériel, l'invention se rapporte à un programme d'ordinateur apte à être mis en oeuvre sur une entité telle que définie ci-dessus, le programme comprenant des instructions de code qui, lorsqu'il est exécuté par un processeur, réalise les étapes du procédé de sélection définies ci-dessus.

Enfin, selon un autre aspect matériel, l'invention se rapporte à un support de données sur lequel a été mémorisée au moins une série d'instructions de code de programme pour l'exécution d'un procédé de gestion tel que défini ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle d'un dispositif de lecture.
[Fig. 3] La figure 3 un schéma synoptique simplifié de la structure matérielle d'une passerelle domestique.
[Fig. 4] La figure 4 illustre schématiquement un contenu découpé en segments de plusieurs qualités.
[Fig. 5] La figure 5 illustre un mode de réalisation sous forme de messages échangés entre les différents dispositifs impliqués dans le procédé de gestion.

### Description détaillée d'un exemple de réalisation illustrant l'invention :

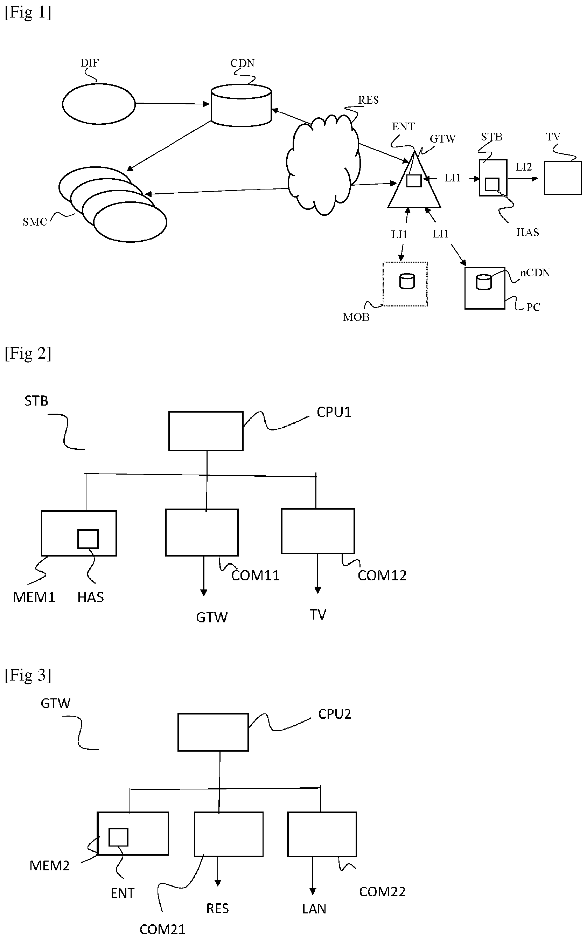

On présente désormais, en relation avec la figure 1, un système informatique SYS incluant une passerelle domestique GTW offrant un réseau local dans lequel se trouve des dispositifs de traitement de données à savoir un dispositif de lecture STB, par exemple un décodeur, un ordinateur PC, une tablette TAB.

Le système SYS comprend aussi une entité de traitement de flux de données référencée nCDN.

Dans notre exemple, l'entité de traitement nCDN est apte à transmettre sur demande des segments de contenu à destination du dispositif de lecture STB.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type Wi-Fi pour une communication locale sans fils avec la passerelle résidentielle GTW. Le module en question est référencé CMO11 sur la figure 2.

Le dispositif de lecture STB comprend une entité de téléchargement en mode streaming HAS apte à gérer le téléchargement de segments. Cette entité de téléchargement HAS est apte à entrer en communication avec une entité de traitement de flux de données nCDN compatible.

La figure 3 représente une architecture d'une passerelle domestique GTW. Cette passerelle comprend, classiquement, des mémoires MEM2 associées à un processeur CPU2. Les mémoires peuvent être également de type ROM (de l'anglais « Read Only Memory ») ou RAM (de l'anglais « Random Access Memory ») ou encore Flash.

La passerelle communique avec un réseau étendu de type WAN via un module de communication COM21.

La passerelle peut transmettre, grâce à un module de communication COM22 un contenu à destination d'un dispositif du réseau local via un lien LI1, Wi-Fi dans notre exemple.

La passerelle GTW comprend en outre une entité de gestion ENT apte à réaliser des étapes décrites ci-dessous. L'entité de gestion ENT est localisée dans la passerelle dans l'exemple, elle pourrait cependant est située ailleurs dans le système, par exemple sur un dispositif de traitement de données du réseau local.

Les segments créés par l'entité de traitement nCDN sont compatibles avec l'entité HAS.

Dans notre exemple, l'entité de traitement nCDN dispose de plusieurs sources multicast SMC pour récupérer un contenu.

Pour sélectionner une des sources de données multicast SMC, le dispositif de lecture STB, sous-entendu le module HAS présent sur le dispositif de lecture STB, émet une requête de demande d'accès au contenu et indique une qualité souhaitée pour la restitution souvent exprimée en kbits/sec par l'homme du métier. Suite à la réception, l'entité nCDN s'adresse (ou s'abonne) à un serveur multicast SMC (parmi plusieurs serveur multicast) disposant du contenu dans la qualité souhaitée et reçoit en retour le contenu depuis le serveur multicast en question via le réseau de télécommunication, le réseau Internet dans notre exemple ; le mode de transmission mis en oeuvre entre le serveur multicast et l'entité de traitement est par exemple le mode IPTV (sigle de « Internet Protocol Télévision »), connu de l'homme du métier. L'invention ne se limite pas au mode IPTV mais à tout autres de modes de transmission similaire.

Ensuite, après réception du contenu dans une qualité donnée, l'entité de traitement nCDN mémorise les paquets IP reçus dans une mémoire RAM de manière à traiter ces paquets, le traitement consistant dans notre exemple à découper les paquets en segments, et à encoder chaque segment pour obtenir des segments dans la qualité demandée.

Après encodage, l'entité de traitement nCDN transmet en réponse un fichier de description incluant les adresses (URL) des segments ainsi créés.

On verra dans la suite où se situe l'entité de traitement nCDN dans le réseau local conformément à l'invention.

On expliquera aussi brièvement dans la suite en quoi consiste un segment et quelles sont les qualités possibles (exprimée en Kbits/s) pour chaque segment d'un contenu.

Un réseau de communication RES permet une communication entre les sources de contenu, dans notre exemple des serveurs multicast offrant chacun des qualités respectives pour un même contenu et l'entité nCDN. Dans notre exemple, le réseau RES est le réseau Internet.

Le dispositif de lecture STB est relié via un lien de communication LI1 à la passerelle GTW et via un lien de communication, par exemple un lien HDMI, à un dispositif de restitution TV tel qu'un écran de télévision.

Dans notre exemple, la liaison entre le dispositif de lecture STB et l'entité de traitement nCDN est une liaison point à point (ou unicast).

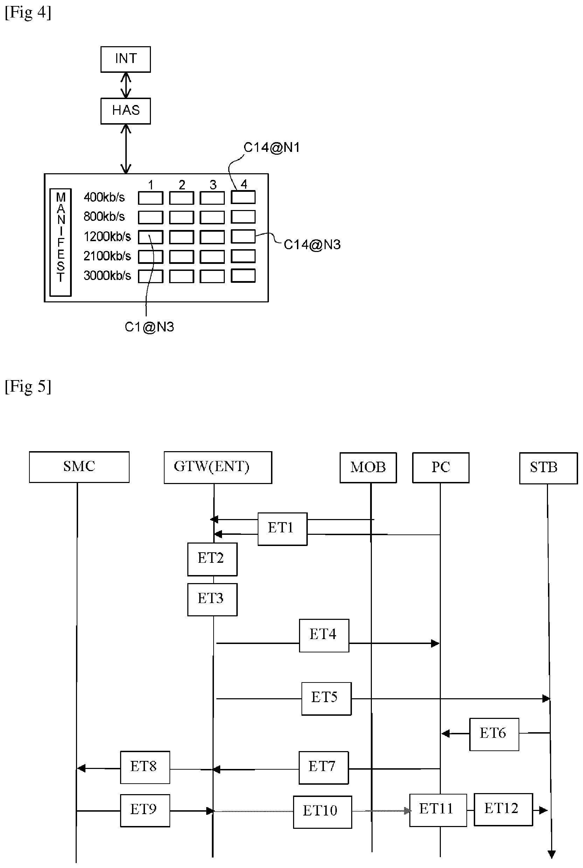

En référence à la figure 4, différentes qualités peuvent être encodées pour le même contenu d'une chaîne, correspondant par exemple à différents débits d'encodage.

Sue cette figure 4, sont représentés des segments sous forme de tableau, l'entité HAS qui accède aux segments et une interface qui permet à l'entité HAS de communiquer avec l'extérieur.

On parlera de qualité pour se référer à une certaine résolution du contenu numérique (résolution spatiale, temporelle, niveau de qualité associée à la compression vidéo et/ou audio) avec un certain débit d'encodage. Chaque niveau de qualité est lui-même découpé sur le serveur de contenus en segments temporels.

La description de ces différentes qualités et de la segmentation temporelle associée, ainsi que les segments de contenu, sont décrits pour le dispositif de lecture STB et mis à sa disposition via leurs adresses Internet (URI : Universal Ressource Identifier). L'ensemble de ces paramètres (qualités, adresses des segments, etc.) est en général regroupé dans un fichier de paramètres appelé fichier de description ou « fichier manifest » par l'homme du métier. On notera que ce fichier de paramètres peut être un fichier informatique ou un ensemble d'informations descriptives du contenu, accessible à une certaine adresse.

Le dispositif de lecture STB, dans un contexte de téléchargement adaptatif progressif, peut adapter les requêtes d'accès qu'il transmet à l'entité nCDN pour recevoir et décoder le contenu demandé à la qualité qui lui correspond au mieux. Dans notre exemple, si les contenus sont disponibles aux débits 400 kb/s (kilobits par seconde) (Résolution 1, ou niveau 1, noté N1), 800 kb/s (N2), 1200 kb/s (N3) 2100 kb/s (N4) 3000 kb/s (N5) et que le terminal client dispose d'une bande passante de 3000 kb/s, il peut demander le contenu à n'importe quel débit inférieur à cette limite, par exemple 2100 kb/s. De manière générale, on note « Ci@Nj » le contenu numéro i avec la qualité j (par exemple le j-ième niveau Nj de qualité décrit dans le fichier de description).

Dans cet exemple, pour visualiser un contenu, le dispositif de lecture STB interroge tout d'abord, via la passerelle de service GTW, l'entité de traitement nCDN pour obtenir une adresse du fichier de description du contenu géré par le dispositif concerné. Dans la suite, on supposera que ce fichier est un fichier de type fichier de description selon la norme MPEG-DASH.

Un fichier de description comprend des informations sur les segments et les débits d'encodage disponibles. Un tel fichier comporte par exemple pour chaque segment plusieurs qualités différentes (N1 = 400 kb/s, N2 = 800 kb/s, N3 = 1200 kb/s, ...) et les adresses d'accès des segments en question. Une fois que le dispositif de lecture STB dispose des adresses de segments correspondant au contenu souhaité, le dispositif de lecture STB télécharge les segments les uns après les autres. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

Ensuite, le décodeur STB reçoit les segments, les décode ensuite, et requiert une restitution sur l'écran du téléviseur TV.

On notera que le contenu est quelconque. Le contenu est par exemple un programme télévisuel diffusé en différé, ou une vidéo à la demande, ou une vidéo personnelle de l'utilisateur, ou tout autre contenu multimédia, pour laquelle l'invention s'applique également.

Le dispositif de lecture STB peut être piloté par l'utilisateur au moyen d'une télécommande. La télécommande peut être physique ou logicielle.

Selon l'invention, une étape préalable est exécutée au cours de laquelle un dispositif de traitement de données est sélectionné dans le réseau local pour réaliser le traitement souhaité. Contrairement à l'état de la technique dans lequel l'entité est stockée dans la passerelle domestique par défaut, dans l'invention, l'entité de traitement peut être localisée sur un dispositif du réseau local au choix.

Plus particulièrement, le flux reçu par la passerelle domestique selon un premier mode de transmission, ici le mode multicast, est routé par la passerelle à destination du dispositif sélectionné pour y être traité, le traitement consistant à transformer le premier mode de transmission (multicast) en un deuxième mode de transmission (unicast).

Notre exemple se base sur une transformation du mode multicast en un mode unicast ; cependant, l'invention ne se limite pas à cet exemple mais s'étend à tout type de mode de transmission. La passerelle pourrait recevoir un flux en unicast et transformer ce flux en un mode de transmission multicast dans le réseau local.

Dans la suite, on s'intéressera à une réception d'un flux en mode multicast et à une transformation de ce mode en une transmission unicast.

On verra dans notre exemple que le dispositif de traitement de données est sélectionné en fonction des performances des ressources physiques et/logicielles pour la réalisation du traitement de données.

Les étapes d'un mode de réalisation sont décrites ci-dessous en référence à la figure 5. Sur cette figure 5, sont représentés des axes correspondants 1) au serveur multicast, 2) à la passerelle GTW incluant le dispositif nCDN, 3) à un ensemble de dispositif de traitement de données et 4) au dispositif de lecture STB incluant le module de téléchargement HAS

Un axe temporel permet de représenter le sens d'exécution des étapes.

Sur cette figure 5, des liaisons fléchées sont illustrées entre les axes afin d'illustrer des échanges de messages entre les différents dispositifs.

Lors d'une étape ET1, l'entité de gestion ENT, présente dans la passerelle domestique dans notre exemple, reçoit des données représentatives de ressources physiques et/ou logicielles de tout ou partie des dispositifs de traitement de données du réseau local LAN, à savoir dans notre exemple du mobile MOB et de l'ordinateur PC.

Lors d'une étape ET2, dans notre exemple, l'entité de gestion ENT s'intéresse à une ressource physique en particulier à savoir la mémoire volatile de type RAM des différents dispositifs, plus particulièrement à la taille en octets de ces mémoires. L'invention ne se limite pas à cette ressource mais s'étend à d'autres ressources ; par exemple, d'autres ressources peuvent être prises en compte à savoir la puissance du processeur, les liaisons de communication dont dispose les dispositifs de traitement de données par exemple permettant la réception d'un flux de données depuis le réseau RES etc.

Lors d'une étape ET3, l'entité ENT classe les dispositifs en fonction des tailles des mémoires RAM respectives et sélectionne dans notre exemple le dispositif ayant la taille en octet la plus importante.

On suppose que le dispositif sélectionné est l'ordinateur PC.

Lors d'une étape ET4, l'entité de gestion ENT requiert le téléchargement de l'entité de traitement nCDN dans le dispositif sélectionné PC. En variante, le dispositif sélectionné peut être équipé d'une entité de traitement désactivée. Lors de cette étape ET4, au lieu de transmettre l'entité de traitement, on vient activer tout simplement l'entité de traitement.

Lors d'une étape ET5, l'entité de gestion ENT ayant à disposition l'adresse IP dans le réseau local de l'ordinateur PC désigne cette adresse IP et transmet cette adresse IP au client HAS installé dans le dispositif de lecture STB.

Dans notre exemple, l'ordinateur PC disposant d'une connexion Wi-Fi est apte à communiquer directement avec le dispositif de lecture STB.

A noter que dans le cas où le dispositif sélectionné ne peut communiquer directement avec le dispositif de lecture STB, le dispositif sélectionné communique avec le dispositif de lecture STB via la passerelle domestique. GTW.

Dans notre exemple, à ce stade, l'ordinateur PC, sous-entendu l'entité de traitement nCDN installée sur l'ordinateur PC, peut transmettre des segments au dispositif de lecture STB en mode Unicast.

On suppose ensuite que le dispositif de lecture STB transmet, lors d'une étape ET6, une requête d'accès à un contenu. Cette requête est transmise à l'ordinateur PC équipé de l'entité de traitement Ncdn, l'ordinateur ayant été sélectionné comme lieu de traitement à savoir du passage du mode multicast au mode unicast.

L'entité nCDN, installée sur l'ordinateur PC, reçoit et requiert ensuite, lors d'une étape ET7, un accès au contenu auprès d'un serveur de multicast SRV choisi dans notre exemple en fonction d'une qualité renseignée dans la requête issue du dispositif de lecture STB. La requête transite dans notre exemple par la passerelle domestique. La passerelle route la requête lors d'une étape ET8.

Lors d'une étape ET9, la passerelle domestique GTW reçoit en retour un flux de données qu'elle route vers l'ordinateur PC lors d'une étape ET10 pour que l'entité de traitement nCDN installée sur l'ordinateur PC puisse traiter le flux de données reçu.

Lors d'une étape ET11, l'entité de traitement nCDN reçoit ensuite des paquets de données IP issus de la passerelle GTW. Après réception, l'entité de traitement nCDN réalise un traitement par le biais de son processeur. Le traitement est connu de l'homme du métier et ne sera pas décrit davantage car sans intérêt pour l'exposé de l'invention. Rappelons simplement que les paquets IP reçus sont découpés en segments de contenu ; lors d'une étape ET12, les segments sont ensuite transmis successivement depuis l'ordinateur PC au dispositif de lecture STB.

A ce stade le dispositif de lecture STB peut recevoir les segments, les décoder et requérir une restitution sur le dispositif de restitution TV.

Le mode de réalisation décrit ci-dessus peut faire l'objet de variantes.

Selon une variante, la localisation de l'entité de traitement nCDN peut être déterminée après chaque demande d'accès à un contenu issue du dispositif de lecture STB. La localisation du lieu de traitement du flux de données varie donc au fil du temps.

Selon une autre variante, le choix de la localisation peut être fait pendant la réception des segments de contenu. En effet, le choix initial peut ne plus être adapté ultérieurement, par exemple le CPU diminue sur l'équipement choisi est soudainement sollicité pour une autre tâche. Dans ce cas, un autre dispositif de traitement de données est sélectionné pour réaliser le traitement de l'entité de traitement nCDN.

On a vu précédemment dans notre exemple de réalisation que les capacités de traitement incluent une taille de mémoire volatile. En complément, selon une variante, l'entité de gestion ENT prend aussi en compte le débit d'encodage associé au flux reçu. En effet, le débit d'encodage variant dans le temps lorsque le téléchargement est adaptatif, les besoins en mémoire RAM lors du traitement du flux de données varie également. Le nombre de dispositifs de traitement de données adaptés au traitement peut donc augmenter en fonction du débit d'encodage courant.

On a vu précédemment que la passerelle domestique GTW route le flux de données vers le dispositif de traitement choisi, dans l'exemple l'ordinateur PC. En variante, le dispositif de traitement de données est choisi en fonction de son aptitude à recevoir le flux de données depuis un réseau de communication. Ce mode permet d'accéder au contenu même si la passerelle est indisponible ; dans ce cas le dispositif sélectionné accède au flux et reçoit le flux depuis le réseau RES en lieu et place de la passerelle.

Selon une autre variante, comme indiqué ci-dessus, des entités de traitement nCDN sont stockés nativement sur les dispositifs de traitement de données du réseau local et peuvent être activés sur demande. Cette variante évite une étape de transmission de l'entité de traitement nCDN.

Rappelons enfin ici que l'invention comprend, pour la réalisation d'un traitement d'un flux de données reçu par le réseau local, une étape de sélection (ET3) d'un dispositif dans l'ensemble de dispositifs inclut dans le réseau local, et de traitement du flux dans le dispositif sélectionné. On comprend ici que lorsqu'un flux de données est reçu et voué à être traité par un dispositif particulier, par exemple la passerelle domestique, selon l'invention le lieu de traitement peut être modifié et être délocalisé dans un dispositif distinct du réseau local. En d'autres mots un flux de données destiné à être traiter par un dispositif le sera par un autre dispositif du réseau local.

On a vu aussi ci-dessus en référence à un mode de réalisation que traitment peut concerner le passage d'un mode de transmission multicast à un mode de transmission unicast ; ce mode de réalisation a trait à un procédé de gestion du traitement d'un flux de données dans un réseau local comprenant un ensemble de dispositifs de traitement de données (GTW,PC,MOB) dont une passerelle domestique, le flux étant reçu par la passerelle domestique selon un premier mode de transmission et apte à être reçu par un dispositif du réseau local en mode unicast ; le procédé comprenant une étape de sélection (ET3) d'un dispositif dans l'ensemble de dispositifs de traitement de données, et une étape de transformation du mode de transmission multicast au mode unicast dans le dispositif sélectionné.

On comprend donc que le lieu de traitement initial peut être la passerelle domestique GTW ; ensuite le lieu peut être l'ordinateur PC ; le lieu peut ensuite redevenir la passerelle domestique, etc. Le lieu de traitement évolue dans le temps.Précisons enfin ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion du traitement d'un flux de données dans un réseau local comprenant un ensemble de dispositifs de traitement de données (GTW,PC,MOB), **caractérisé en ce qu'**il comprend une étape de sélection (ET3) d'un dispositif dans l'ensemble de dispositifs de traitement de données et de traitement du flux dans le dispositif sélectionné.

2. Procédé de gestion selon la revendication 1, **caractérisé en ce qu'**un dispositif dudit ensemble est une passerelle domestique, le flux étant reçu par la passerelle domestique selon un premier mode de transmission, et routé par la passerelle à destination du dispositif sélectionné pour y être traité, le traitement consistant à transformer le premier mode de transmission en un deuxième mode de transmission.

3. Procédé de gestion selon la revendication 2, **caractérisé en ce que** le premier mode est un mode de transmission multicast et le deuxième mode de transmission est le mode unicast.

4. Procédé de gestion selon la revendication 1, **caractérisé en ce que** les dispositifs de traitement de données ont une adresse dans le réseau, et **en ce que** la sélection du dispositif est suivie d'une transmission de l'adresse à destination d'un dispositif de lecture (STB) apte à lire le flux de données issu du traitement.

5. Procédé de gestion selon la revendication 1, **caractérisé en ce que** le dispositif est sélectionné en fonction de ses capacités de traitement.

6. Procédé de gestion selon la revendication 1, **caractérisé en ce que** la sélection s'effectue en comparant des capacités de traitement de dispositifs du réseau local et en sélectionnant un dispositif à la base de la comparaison.

7. Procédé de gestion selon la revendication 3 ou 4, **caractérisé en ce que** les capacités de traitement incluent une taille de mémoire volatile.

8. Procédé de gestion selon l'une des revendications précédentes, **caractérisé en ce que** le flux de données est associé à un débit d'encodage, et **en ce que** le choix du lieu d'installation de l'entité dépend en outre dudit débit d'encodage.

9. Procédé de gestion selon la revendication 1, **caractérisé en ce que** le réseau local comprend une passerelle domestique apte à interfacer un réseau étendu et le réseau local, et **en ce que** la passerelle route un flux de données issu du réseau vers le lieu de traitement dans le réseau local.

10. Procédé gestion selon la revendication 1, **caractérisé en ce que** le dispositif de traitement de données est apte à recevoir le flux de données depuis un réseau de communication.

11. Entité de gestion (ENT) du traitement d'un flux de données dans un réseau local comprenant un ensemble de dispositifs de traitement de données (MOB,PC,GTW), **caractérisé en ce qu'**elle comprend un processeur apte réaliser une étape de sélection d'un dispositif dans l'ensemble de dispositifs de traitement de données et un traitement du flux dans le dispositif sélectionné.

12. Dispositif de lecture (STB) comprenant une entité de gestion (ENT) telle que définie dans la revendication 11.

13. Programme d'ordinateur apte à être mis en oeuvre sur une entité de gestion (ENT) telle que définie dans la revendication 11, le programme comprenant des instructions de code qui, lorsqu'il est exécuté par un processeur, réalise les étapes du procédé définies dans la revendication 1.

14. Support de données sur lequel a été mémorisée au moins une série d'instructions de code de programme pour l'exécution d'un procédé selon la revendication 1.
